# EUROPEAN PATENT SPECIFICATION

(11) **EP 1 552 992 B1**
(45) Date of publication and mention of the grant of the patent: **29.11.2006**
(21) Application number: 04250120.5
(22) Date of filing: 12.01.2004
(51) Int. Cl.: B60R 22/405

(54) **Belt retractor**
Gurtaufroller
Rétracteur de ceinture de sécurité

(43) Date of publication of application: 13.07.2005
(73) Proprietor: KEY SAFETY SYSTEMS, INC., Sterling Heights, MI 48314 (US)
(72) Inventor: Bell, John, Carlisle, Cumbria (GB); Palliser, Martyn, Carlisle CA5 7NF (GB)
(74) Representative: Freeman, Jacqueline Carol

(56) References cited:
- EP-B- 0 359 960
- GB-A- 2 303 044
- US-A- 5 232 176

## Description

The present invention relates to a noise reduction device for use with a vehicle sensor in a vehicle occupant safety restraint retractor system.

Conventional seat belt retractors allow an occupant a reasonable degree of freedom for movement during normal driving conditions in order to provide a degree of comfort. A seat belt retractor will allow pay out of webbing when gentle tension is applied to the seat belt during normal operation, but will arrest the occupant's movement during an emergency situation. A vehicle sensor detects a deceleration above a predetermined magnitude, which is indicative of an emergency situation, and causes the retractor to lock.

Known vehicle acceleration sensors comprise an inertial mass such as a ball or cup which moves when the vehicle rapidly decelerates, which moves a pivoted lever to activate a locking mechanism to lock the retractor against further pay out of seat belt webbing. The movable parts create noise when unconstrained in a travelling vehicle. Noise hold out mechanisms (NHOMs) are known which hold the moveable parts of the sensor mechanism to prevent them from rattling and engaging other parts, thus reducing noise levels in the retractor. These NHOMS are reliant upon frictional forces to ensure correct engagement and disengagement of locking elements during normal driving conditions and crash conditions respectively.

GB 2 303 044 A discloses a noise reduction device for use with a vehicle sensor in a vehicle safety restraint retractor, the device comprising a ring part arranged to be frictionally couplable to a retractor spool and an inhibitor arm extending radially outwards from the frictionally couplable part, the device being arranged such that on rewinding of seat belt webbing onto the spool the inhibitor arm is rotatably moved to a first position in which it inhibits the vehicle sensor, and on withdrawal of webbing from the spool, the inhibitor arm moves to a second position in which it does not inhibit the vehicle sensor.

It is a particular problem with frictional NHOMs that a loss of friction between the relevant parts can cause the locking elements to become jammed during a crash condition and this is evidently dangerous since the retractor will then not function correctly. Accordingly the current invention aims to provide an improved vehicle sensor inhibitor mechanism.

According to the present invention there is provided a noise reduction device for use with a vehicle sensor in a vehicle safety restraint retractor, the device comprising a ring part arranged to be frictionally couplable to a retractor spool, an inhibitor arm extending radially outwards and downwards from the frictionally couplable part and a counterbalance mass arranged at the end of a counterbalance arm which extends radially outwards and to the side of the frictionally couplable part and circumferentially spaced from the inhibitor arm, the device being arranged such that on rewinding of seat belt webbing onto the spool the inhibitor arm is rotably moved to a first position in which it inhibits the vehicle sensor, and on withdrawal of webbing from the spool, the inhibitor arm moves to a second position in which it does not inhibit the vehicle sensor, wherein the counterbalance is weighted and located offset from the centre of rotation so as to move the inhibitor arm to the second position if the frictional coupling between the device and the spool fails.

This acts as a fail-safe and allows the vehicle sensor to operate uninhibited when the frictional coupling between the retractor spool and the vehicle sensor inhibitor fails.

The vehicle sensor may comprise a pivotable vehicle sensor lever which interacts with a vehicle sensor mass, the initial movement of which begins a retractor locking sequence. The vehicle sensor lever in turn acts on a locking lever which is restrained by the inhibitor arm when the arm is in the first position preventing movement of the locking lever. The locking lever may be pivotable when the inhibitor arm is in the second position.

The inhibitor arm and the counterbalance are preferably mounted to a resilient ring (or even more preferably moulded in one piece with such a ring), which is clipped onto a bush with a spring member such as a wave washer compressed between them to assist the frictional force. This assembly is then assembled onto the end of the spool. The bush is driven by the spool and constantly rotates with the spool. The inhibitor arm rotates only between the first and second positions and there after slips on the bush.

The inhibitor arm counterbalance and ring may comprise a single moulded plastics member which is simple and cheap to manufacture and which may be inserted onto the retractor in a single assembly step.

The sensor lever and the sensor mass with which it interacts is mounted to a mounting plate, also known as a mechanism bush. The locking lever is mounted on a multifunction piece.

In order that the invention may be clearly understood and readily carried into effect, a preferred embodiment will now be described, by way of example, with reference to the accompanying drawings, in which:
Figure 1 is a cut-away perspective view of a safety restraint retractor illustrating a device according to the present invention;
Figure 2 is a cross-section view of part of figure 1;
Figure 3 is an end view of the retractor of figure 1.

A safety restraint retractor is well known to persons skilled in the art and generally comprises a frame so, a spool 51 of seat belt webbing, an emergency spool locking system attached to one side of the frame, and a retraction spring attached to the other side. A typical retractor is described in EP 0 795 447 A.

The spool 51 is typically mounted to be rotatable within the frame 50 and is biased by the retraction spring to a webbing rewound condition. The emergency locking system comprises a webbing sensor which detects a sudden extraction of the webbing and a vehicle sensor 1 which detects a sudden deceleration of the vehicle, also by inertia means. The vehicle sensor 1 may comprise a mass known as a standing man which generally comprises an upturned cup balanced on a post. The cup tips when acceleration or deceleration of the vehicle exceeds a predetermined limit. Tipping of the cup pivots a sensor lever 11 to begin a locking procedure. A ball and cup form of vehicle sensor is also known wherein a ball rests in a shallow indentation in a cup and moves under the influence of sudden acceleration or deceleration, again to pivot a sensor lever to begin a spool locking procedure.

The vehicle sensor is shown generally at 1 in the figures, and comprises a mass in the form of an upturned cup 10 and a sensor lever 11 mounted in a plastic sensor housing 2 fixed to a mounting plate 28. A locking lever 13 is attached to a multifunction piece 3 which is mounted for limited pivoting about the axis 4 of spool rotation. The multifunction piece 3 is mounted adjacent a toothed ratchet wheel 5 (part of which is visible in a cut-out shown at the bottom of the multifunction piece 3). The ratchet wheel is fixed to the spool 51 and rotates with the spool 51. The locking mechanism acts when movement of the multifunction piece 3 moves a load bearing locking pawl 6 to engage the teeth on the ratchet wheel thus locking the spool 51 against rotation. The locking pawl 6 is brought into engagement with the ratchet wheel 5 by rotation of the multifunction piece 3 by interaction of a cam 7 on the load bearing pawl 6 with a cam surface formed by the inside surface of a slot 8 on the multifunction piece 3. As the multifunction piece 3 pivots in the direction of the arrow A, the locking pawl 6 is pivoted about pivot point 9 towards the axis of rotation 4 of the spool, and into engagement with the ratchet wheel 5.

When the upturned cup 10 of the vehicle sensor tips when acceleration or deceleration over a predetermined threshold is reached, the tipping action of the cup 10 causes the sensor lever 11 to pivot upwards about pivot point 12 and this in turn causes a locking lever 13 to pivot upwards.

The locking lever 13 engages teeth on the ratchet wheel 5 so as to lock the multifunction piece 3 to the ratchet wheel. A small further rotation of the spool 51 causes the ratchet wheel, and with it the multifunction piece 3, to pivot a small amount further bringing the locking pawl 6 into full load bearing engagement with the ratchet wheel and stopping further spool rotation.

The noise reduction device 15 of the invention is commonly known as a NHOM i.e. noise hold out mechanism. A bush 20 extending around the pivot axis 4 of the spool 51 is coupled to the device 15 by friction between the ring 21 and the bush 20, extended by a spring such as a wave washer. The device 15 has two arms: an inhibitor arm 16 which extends generally radially outwards and downwards towards the vehicle sensor 1, and a counterbalance arm 17 also extending radially outwardly from the bush 20 and circumferentially spaced from the inhibitor arm 16 by an angle which is preferably about 70°. A counterbalance mass 22 is located at the end of the counterbalance arm 17.

Under normal operation, when webbing is pulled off the spool in the direction B due to normal comfort movements of the vehicle occupant, then the spool rotates freely and the multifunction piece 3 remains stationary with the locking pawl 6 disengaged.

The multifunction piece 3 is biased to the position shown in the figure by a biasing spring 18.

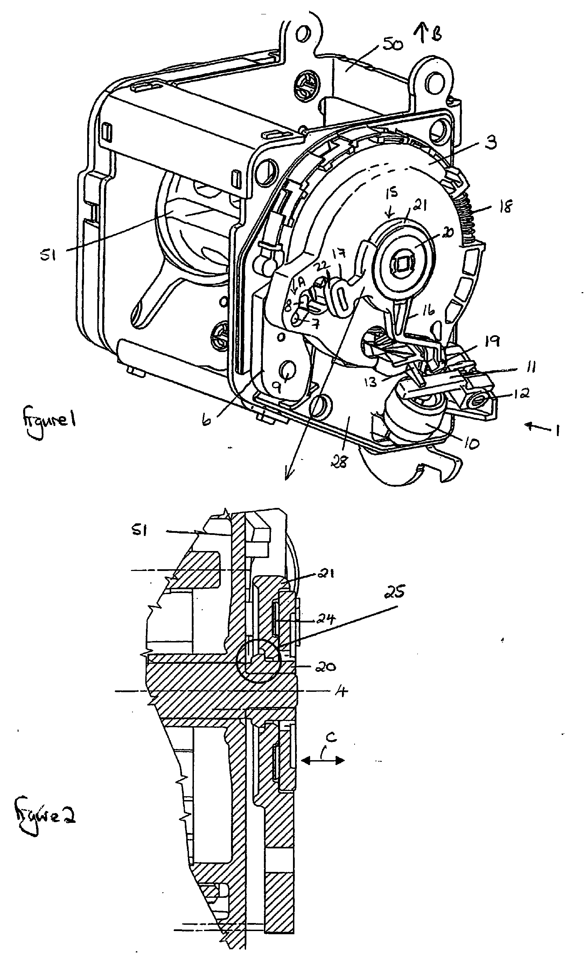

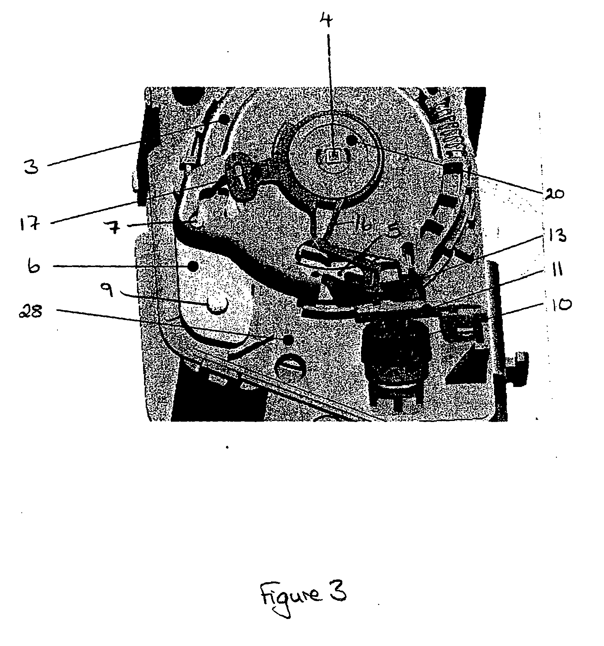

When webbing is rewound onto the spool 51 in the direction opposite to arrow B then the device 15 is in the position shown in the figure and an end 19 of the inhibitor arm 16 engages the locking lever 13 and prevents it from contacting the teeth of the ratchet wheel 5. Thus the unwanted noise caused when the locking lever 13 rattles against the teeth of the ratchet wheel 5 is prevented. The device moves with the bush 20 under friction. The frictionally couplable part of the device 15 is a plastics ring 21 moulded and sized to fit around the bush 20 with a wave washer 24 which pushes the bush 20 and the arm apart. The inhibitor lever device 15 is clipped to the bush 20 with the friction created by the pressure of the wave washer 24 pushing the inhibitor lever and the bush 20 apart as indicated by arrow C and is not influenced by a tight fit between components. The only contact between the inhibitor lever and the bush is on clips formed in the bush 20. These are shown in figure 2 in the highlighted circle section 25. If the friction of contact between the bush 20 and the spool fails through wear or the interposition of foreign bodies or of lubricants, then the device will rotate in the direction of arrow A under default condition is that the influence of the counterbalance mass 22 at the end of the counterbalance arm 17. Thus the inhibitor arm 16 releases and allows full movement of the sensor locking lever 13 and the locking sequence may be satisfactorily initiated in the event of a crash.

## Claims

1. A noise reduction device (15) for use with a vehicle sensor (1) in a vehicle safety restraint retractor, the device comprising a ring part (21) arranged to be frictionally couplable to a retractor spool (51), an inhibitor arm (16) extending radially outwards and downwards from the frictionally couplable part (21) and a counterbalance mass (22) arranged at the end of a counterbalance arm (17) which extends radially outwards and to the side of the frictionally couplable part (21) and circumferentially spaced from the inhibitor arm (16), the device (15) being arranged such that on rewinding of seat belt webbing onto the spool (51) the inhibitor arm (16) is rotably moved to a first position in which it inhibits the vehicle sensor (1), and on withdrawal of webbing from the spool (51), the inhibitor arm moves to a second position in which it does not inhibit the vehicle sensor (1), wherein the counterbalance (22) is weighted and located offset from the centre of rotation so as to move the inhibitor arm (16) to the second position if the frictional coupling between the device (15) and the spool (51) fails.

2. The device according to claim 1, wherein in the first position the inhibiting arm (16) engages a vehicle sensor locking pawl and prevents pivotal movement thereof.

3. A device according to claim 2, wherein the vehicle sensor locking lever (13) is allowed to pivot when the inhibitor arm (16) is in the second position.

4. A device according to any one of the preceding claims, wherein the frictionally couplable part is frictionally coupled to the spool (51) via an intermediate member.

5. A device according to any one of the preceding claims wherein the inhibitor arm (16) the counterbalance arm (17) and the counterbalance (22) are formed integrally with the frictionally coupled part.

6. A device according to claim 5 formed by injection moulding as a single part.

## Patentansprüche

1. Geräuschminderungsvorrichtung (15) zur Verwendung mit einem Fahrzeugsensor (1) in einem Fahrzeugsicherheitsgurtaufroller, wobei die Vorrichtung Folgendes umfasst: einen Ringteil (21), der zum reibschlussfähigen Verbinden mit einer Aufrollerspule (51) angeordnet werden kann, einen Sperrarm (16), der von dem reibschlussfähigen verbindbaren Teil (21) radial nach außen und unten verläuft, und eine Gegengewichtsmasse (22), die am Ende eines Gegengewichtsarms (17) angeordnet ist, der radial nach außen und zur Seite des reibschlussfähigen Arms (21) verläuft und in Umfangsrichtung vom Sperrarm (16) beabstandet ist, wobei die Vorrichtung (15) so angeordnet ist, dass der Sperrarm (16) beim Aufrollen des Sicherheitsgurtbands auf die Spule (51) drehend auf eine erste Positoin bewegt wird, in der er den Fahrzeugsensor (1) sperrt, und der Sperrarm sich beim Abziehen von Band von der Spule (51) auf eine zweite Position bewegt, in der er den Fahrzeugsensor (1) nicht sperrt, wobei das Gegengewicht (22) gewichtet und vom Drehungszentrum versetzt angeordnet ist, um den Sperrarm (16) auf die zweite Position zu bewegen, falls die reibschlüssige Verbindung Reibshcluss zwischen der Vorrichtung (15) und der Spule (51) ausfällt.

2. Vorrichtung nach Anspruch 1, bei der der Sperrarm (16) in der ersten Position in eine Fahrzeugsensorsperrklinke eingreift und seine Drehbewegung verhindert.

3. Vorrichtung nach Anspruch 2, bei der der Fahrzeugsensorsperrhebel (13) sich drehen kann, wenn der Sperrarm (16) in der zweiten Position ist.

4. Vorrichtung nach einem der vorhergehenden Ansprüche, bei dem der reibschlüssige verbindbare Teil über ein Zwischenelement reibschlüssig mit der Spule (51) verbunden ist.

5. Vorrichtung nach einem der vorhergehenden Ansprüche, bei der der Sperrarm (16), der Gegengewichtarm (17) und das Gegengewicht (22) einstückig mit dem reibschlüssig verbundenen Teil ausgebildet sind.

6. Vorrichtung nach Anspruch 5, die durch Spritzguss als einzelner Teil ausgebildet ist.

## Revendications

1. Dispositif de réduction du bruit (15) destiné à être utilisé avec un capteur de véhicule (1) dans un enrouleur de ceinture de sécurité d'un véhicule, le dispositif comprenant une partie de bague (21) destinée à être accouplée par frottement à une bobine de l'enrouleur (51), un bras de blocage (16) s'étendant radialement vers l'extérieur et vers le bas à partir de la partie à accouplement par frottement (21) et une masse d'équilibrage (22) étant agencée au niveau de l'extrémité d'un bras d'équilibrage (17), s'étendant radialement vers l'extérieur et vers le côté de la partie à accouplement par frottement (21), et espacé circonférentiellement du bras de blocage (16), le dispositif (15) étant agencé de sorte que lors du réenroulement de la sangle de la ceinture de sécurité sur la bobine (51), le bras de blocage (16) est déplacé par rotation vers une première position dans laquelle il bloque le capteur du véhicule (1), et que lors du retrait de la sangle de la bobine (51), le bras de blocage est déplacé vers une deuxième position, dans laquelle il ne bloque pas le capteur du véhicule (1), la masse d'équilibrage (22) étant pondérée et décalée du centre de rotation, de sorte à déplacer le bras de blocage (16) vers la deuxième position en cas d'une défaillance de l'accouplement par frottement entre le dispositif (15) et la bobine (51).

2. Dispositif selon la revendication 1, dans lequel, dans la première position, le bras de blocage (16) s'engage dans un cliquet de verrouillage du capteur du véhicule et empêche un déplacement par pivotement correspondant.

3. Dispositif selon la revendication 2, dans lequel le levier de verrouillage (13) du capteur du véhicule peut pivoter lorsque le bras de blocage (16) se trouve dans la deuxième position.

4. Dispositif selon l'une quelconque des revendications précédentes, dans lequel la partie à accouplement par frottement est accouplée par frottement à la bobine (51) par un élément intermédiaire.

5. Dispositif selon l'une quelconque des revendications précédentes, dans lequel le bras de blocage (16), le bras d'équilibrage (17) et la masse d'équilibrage (22) sont formés d'une seule pièce avec la partie à accouplement par frottement.

6. Dispositif selon la revendication 5, formé sous forme d'une seule pièce par moulage par injection.
